# EUROPÄISCHE PATENTSCHRIFT

(11) **EP 3 710 897 B1**
(45) Veröffentlichungstag und Bekanntmachung des Hinweises auf die Patenterteilung: **03.08.2022**
(21) Anmeldenummer: 18795387.2
(22) Anmeldetag: 22.10.2018
(51) Int. Cl.: G05B 19/042

(54) **VERFAHREN UND VORRICHTUNG ZUM CYBERANGRIFFSSCHUTZ VON PUMPENAGGREGATEN**
METHOD AND APPARATUS FOR PROTECTING PUMP UNITS FROM CYBER ATTACKS
PROCÉDÉ ET DISPOSITIF DE PROTECTION CONTRE DES CYBERATTAQUES DE GROUPES MOTOPOMPES

(30) Priorität: 15.11.2017 DE 102017220380
(43) Veröffentlichungstag der Anmeldung: 23.09.2020
(73) Patentinhaber: KSB SE & Co. KGaA, 67227 Frankenthal (DE)
(72) Erfinder: BOSBACH, Franz Gerhard, 67227 Frankenthal (DE); BRODERSEN, Sönke, 67227 Frankenthal (DE)
(86) Internationale Anmeldenummer: PCT/EP2018/078893
(87) Internationale Veröffentlichungsnummer: WO 2019/096545

(56) Entgegenhaltungen:
- EP-A1- 3 242 033
- WO-A1-2017/090045
- US-A1- 2016 330 225

## Beschreibung

Die vorliegende Erfindung betrifft ein Verfahren und eine Vorrichtung zum Schutz eines Pumpenaggregates, insbesondere Kreiselpumpenaggregates, vor Cyberangriffen.

Die gezielte Beeinflussung oder Zerstörung einer Kreiselpumpe ist ein Mittel bei Cyberangriffen. Bei Cyberattacken handelt es sich um gezielte Angriffe auf eine spezifische Infrastruktur wichtiger Rechnernetze von außen. Solche Rechnernetzwerke werden auch zunehmend zur Steuerung von Anlagen eingesetzt.

Kreiselpumpen und insbesondere Kreiselpumpenaggregate, umfassend Pumpe, Motor, Steuerelektronik und bedarfsweise ein Regelventil, spielen in Produktionsanlagen eine bedeutende Rolle. Meistens werden Kreiselpumpen durch geregelte oder ungeregelte Elektromotoren angetrieben.

Greifen Hacker mittels Cyberattacken Industrieanlagen an, so ist es häufig der Fall, dass Stromzufuhren direkt unterbrochen werden. Ein Produktionsausfall ist die Folge. Für Angriffe, die differenzierter wirken als ein generelles Abschalten, ist ein komplexeres Vorgehen erforderlich. Zielt man auf konkrete Prozesse, wird dafür ein genaues Wissen über deren Aufbau und Regelung benötigt. Dies erschwert einen Angriff auf konkrete Prozesse. Alle Prozesse mit Fluiden weisen jedoch strömungsführende Einrichtungen mehr oder minder standardisierter Bauarten auf, die in der Breite identifizierbarer und strukturierter angreifbar sind als gesamte Prozesse.

Beispielsweise kann durch einen Cyberangriff die Drehzahl der Kreiselpumpe manipuliert werden.

Durch diese Manipulation kann die Kreiselpumpe in einen ungünstigen Wirkungsgradbereich gefahren werden, der hohe zusätzliche Betriebskosten verursacht. Auch eine teilweise oder vollständige Zerstörung des Antriebs der Kreiselpumpe bzw. der Kreiselpumpe selbst oder von anderen Anlagenteilen ist denkbar.

Pumpen werden für den konkreten Einsatz in einer Anlage exakt ausgelegt und konfiguriert. Bei manchen Pumpen handelt es sich sogar um maßgefertigte Konstruktionen, sodass nach einer Beschädigung etliche Wochen bzw. Monate vergehen können, bis Ersatzteile oder eine Ersatzpumpe bereitsteht. Im schlimmsten Fall steht die Anlage bis dahin still. Somit können durch solche Attacken auf strömungsführenden Einrichtungen hohe Produktionsausfälle entstehen.

Im schlimmsten Fall lassen sich durch solche Manipulationen sogar Explosionen hervorrufen. Im Falle eine Chemieanlage wären die Folgen fatal. Bei Öl- bzw. Gasförderanlagen können weitreichende Folgen für die Umwelt hinzukommen.

Bei Kreiselpumpen wird die gesteuerte Verstellung der Drehzahl als Drehzahlregelung bezeichnet. Diese Regelung wird zur energieeffizienten Anpassung der Pumpendrehzahl an die betriebsnotwendigen Werte (Leistungsdaten) genutzt. Drehzahlregelungen mittels eines Frequenzumrichters sind bei variablen Förderstromanforderungen die effizienteste Methode zum Anpassen der Pumpenleistung.

Drehzahlgeregelte Pumpen verbrauchen nur die Menge an Energie, die sie für eine bestimmte Aufgabe benötigen. Im Vergleich zu anderen Regelungsmethoden bietet die frequenzgeregelte Drehzahlregelung den höchsten Systemwirkungsgrad und somit die effizienteste Nutzung von Energie zu einem bestimmten Zweck.

Drehzahlgeregelte Pumpen lösen den üblichen Vorgang einer Festdrehzahl-Pumpe für den maximalen Betriebspunkt, deren überschüssige Leistung durch eine Armatur gedrosselt wird, ab. Diese Regelarmatur ist für kleine Änderungen und zur Prozessregelung weiter vorhanden, auch wenn dies durch die Drehzahlregelung der Pumpe nicht nötig wäre.

Die Regelung der Drehzahl einer Kreiselpumpe erfolgt mit dem beschriebenen Frequenzumrichter durch die Variation von Frequenz und Spannung für den beispielsweise verwendeten Drehstromasynchronmotor. Diese Methode bietet den optimalen Nutzen bei relativ geringem Aufwand und hohem Wirkungsgrad. Der Frequenzumrichter wandelt entsprechend vorgegebener Muster die Spannung und Frequenz der Netzstromversorgung so um, dass der Motor bei verschiedenen Drehzahlen betrieben werden kann. Bei dieser Art von Frequenzregelung können folgende Probleme auftreten:
- Geräusche im Motor, die manchmal als Störgeräusche ins System übertragen werden,
- hohe Spannungsspitzen am Ausgang des Frequenzumrichters zum Motor.

Zum Messen, Steuern und Regeln von Abläufen, beispielsweise zur Automatisation von Prozessen und zur Überwachung von großen Systemen, kommen in vielen Bereichen der Industrie sogenannte Industrial Control Systems (ICS; Deutsch: industrielle Steuerungssysteme, Automatisierungssysteme) zum Einsatz. Diese finden häufig Verwendung in der produzierenden Industrie. Über derartige Systeme lassen sich beispielsweise die Drehzahl einer Pumpe oder die Stellung einer eine Strömung regelnden Armatur beeinflussen.

ICS waren in der Vergangenheit physisch von anderen IT-Systemen und Netzen entkoppelt und damit vor äußeren Einflüssen geschützt. Daher war deren IT-Sicherheit von untergeordneter Bedeutung.

Mit dem Einzug von IT-Systemen aus dem Büroumfeld und der zunehmenden Vernetzung der ICS sind diese Systeme heute ähnlichen Gefährdungen ausgesetzt wie Systeme aus der klassischen Unternehmens-IT.

Je nach Ziel der Angreifer unterscheidet sich deren Vorgehensweise. Bei Systemen, die direkt über das Internet erreichbar sind, werden gezielt Angriffe auf das System gestartet. Es werden also direkt Schwachstellen des angegriffenen Systems ausgenutzt. Diese können gegebenenfalls das Betriebssystem oder Serveranwendungen betreffen.

Bei vielen in den letzten Jahren bekanntgewordenen Angriffen dienen sogenannte Spear-Phishing Attacken als Einstieg in das Unternehmen. Auf diese Weise wird eine Art "Brückenkopf" auf einen Rechner in dem Unternehmen gerichtet. Von diesem Brückenkopf aus wird das Netzwerk ausgekundschaftet und weitere Systeme werden identifiziert. Haben die Angreifer das eigentliche Zielsystem erreicht, ziehen sie von dort die gesuchten Informationen ab und nehmen die Manipulation vor. Wenn der Angreifer sein Ziel erreicht hat, versucht er seine Spuren zu verwischen und unentdeckt zu bleiben.

Andere Angriffe zielen auf geschlossene Systeme durch Verbreitung über mobile Datenspeicher, die achtlos an ein geschlossenes System angebunden werden. Durch Auslesen des mobilen Datenspeichers installiert sich die Routine selber.

In der EP 3 242 033 A1 wird ein Verfahren zum Betreiben eines elektronisch gesteuerten Pumpenaggregats beschrieben, bei dem Betriebsdaten erfasst und ausgewertet werden.

In der US 2016/0330225 A1 wird ein Verfahren zum Erkennen von Anomalien in einem industriellen Steuerungssystem beschrieben.

In der WO 2017/090045 A1 wird ein System und ein Verfahren zur Erkennung eines Cyberangriffs auf von SCADA/ICS verwaltete Anlagen beschrieben.

In der EP 2 279 465 B1 wird ein computerimplementiertes Verfahren zum Cyber-Sicherheitsmanagement für ein industrielles Steuersystem beschrieben. Dabei wird ein zentralisiertes Systemsicherheitsmanager-Programmmodul bereitgestellt. Dieses ist durch eine Verarbeitungseinrichtung einführbar. Das zentralisierte Systemsicherheitsmanager-Programmmodul ist in eine integrierte Befehls- und Steuerungsbenutzer Schnittstelle in einer Überwachungs-, Steuerungs- und Datenerfassungseinheit integriert.

In der EP 2 500 579 A1 wird ein Verfahren zur Überwachung einer von einem Elektromotor angetriebenen Kreiselpumpe beschrieben. Es wird ausgeführt, dass die Leistungsaufnahme und der Laststrom des Elektromotors für die Drehmomentbildung ausschlaggebend ist. Da Werte der Leistungsaufnahme oder des Laststroms meist in Motorsteuerungsanlagen ohnehin vorliegen ist zur Überwachung der Kreiselpumpe keine zusätzliche Sensorik erforderlich.

In der EP 2 433 010 B1 wird ein Verfahren und eine Vorrichtung zur Betriebspunktbestimmung einer Arbeitsmaschine beschrieben. Eine von der Arbeitsmaschine aufgenommene Leistung bzw. deren Fördermenge charakterisieren dabei einen Betriebspunkt. Im Verfahren werden betriebspunktabhängige Messgrößen der Arbeitsmaschine durch Sensoren erfasst. Die Messwerte werden während des Betriebs gespeichert und ausgewertet.

Aufgabe der Erfindung ist es, ein Verfahren und eine Vorrichtung bereitzustellen, durch die Cyberangriffe auf oben beschriebene Pumpenaggregate, insbesondere Kreiselpumpenaggregate, umfassend eine Fluidfördereinrichtung, insbesondere eine Kreiselpumpe, einen Motor, eine Steuerelektronik und bedarfsweise ein Regelventil, wirksam verhindert werden können. Dabei sollen die Komponenten des Pumpenaggregats selbst sowie sämtliche in der Anlage eingesetzten Komponenten zuverlässig geschützt werden, sodass ein Ausfall der Anlage verhindert wird. Das Verfahren bzw. die Vorrichtung sollen einfach in die Anlage zu implementieren sein, sodass eine Einrichtung bzw. eine Nachrüstung mit einem möglichst geringen Kostenaufwand für den Hersteller und Betreiber verbunden sind.

Diese Aufgabe wird erfindungsgemäß durch ein Verfahren zum Schutz eines Pumpenaggregats bei Cyberangriffen mit den Merkmalen des Anspruchs 1 und eine Einheit zur Durchführung des Verfahrens mit den Merkmalen des Anspruchs 12 gelöst. Bevorzugte Varianten sind den Unteransprüchen, der Beschreibung und den Zeichnungen zu entnehmen.

Demnach wird einerseits ein Verfahren zum Schutz eines Pumpenaggregats umfassend eine drehzahlgeregelte Fluidfördereinrichtung, insbesondere Kreiselpumpe, einen Antrieb und eine Steuerung, bei Cyberangriffen vorgeschlagen. Erfindungsgemäß wird zunächst mindestens ein erstes Signal erfasst, welches die Drehzahl und/oder Drehzahlregelung der Fluidfördereinrichtung betrifft. Die Erfassung des ersten Signals kann optional auch mithilfe von Sensoren erfolgen.

Das mindestens eine erste Signal wird an eine Einheit weitergeleitet bzw. von einer Einheit erfasst und dort ausgewertet. In der Einheit werden im Rahmen einer Auswertung mindestens eine Soll-Größe und mindestens eine aus dem ersten Signal abgeleitete Ist-Größe miteinander verglichen. Kommt es zu erheblichen Abweichungen bzw. werden vorgegebene Grenzwerte über- bzw. unterschritten, kann die Einheit anhand der Auswertung feststellen, ob ein Cyberangriff auf das Pumpenaggregat, beispielsweise auf den Antrieb der Fluidfördereinrichtung oder auf eine andere mit dieser in Verbindung stehende Komponente, stattgefunden hat.

In dem Fall, dass die Einheit im Zuge dieser Auswertung einen mutwillig herbeigeführten regelwidrigen Betrieb des Pumpenaggregats, insbesondere des Antriebs, der Steuerung und/oder der Fluidfördereinrichtung, feststellt, reagiert sie durch die Ausgabe von mindestens einem zweiten Signal und bringt dadurch das Pumpenaggregat in einen Sicherheitszustand, durch den der aktuelle und/oder künftige Cyberangriffe wirksam abgewehrt werden. Gleichzeitig wird in Reaktion auf das mindestens eine zweite Signal die Fluidfördereinrichtung in einen regelkonformen Betrieb überführt, indem Komponenten der Fluidfördereinrichtung und/oder der Steuerung und/oder des Antriebs entsprechend eingestellt werden.

Die Einheit analysiert vorzugsweise Signale, welche die drehzahlgeregelte Fluidfördereinrichtung bzw. die Steuerung bekommt. Auf einen Cyberangriff können insbesondere folgende Phänomene hinweisen:
- systematisches Anfahren von Drehzahlgrenzen,
- schnelle An- bzw. Auszyklen,
- schnelle Rampen mit der die Drehzahl hoch bzw. runter gefahren wird,
- Erregung von Schwingungen,
- Anomalien in der Ansteuerung, die gegenüber dem üblichen Verhalten.

Die Einheit sendet nach einer Analyse entsprechender Eingangsdaten Signale an Komponenten des Pumpenaggregats zur Herbeiführung eines vor Cyberangriffen geschützten Sicherheitszustandes. Das erfindungsgemäße Verfahren ist dabei sowohl geeignet um Cyberangriffe auf ein zentrales Netzwerk als auch um Cyberangriffe auf einzelne Komponenten des Pumpenaggregats abzuwehren.

Zur Steuerung des erfindungsgemäßen Pumpenaggregats kann neben einer Steuerelektronik auch mindestens eine Regelkomponente, beispielsweise ein Regelventil, gehören.

Der Begriff Cyberangriff bezeichnet vorliegend jedes von außen erfolgende mutwillige Aufzwingen eines regelwidrigen Betriebs.

Bei einer besonders vorteilhaften Variante der Erfindung weist die Einheit einen Überwachungsbaustein auf. Der Überwachungsbaustein kann über eine Auswerteeinheit verfügen. Die Auswerteeinheit ihrerseits kann mit einem Speicher verbunden sein. Weiterhin umfasst der Überwachungsbaustein vorzugsweise eine Eingabe- bzw. eine Ausgabeeinheit.

Bei einer vorteilhaften Variante der Erfindung ist der Überwachungsbaustein mit einem Motorbaustein verbunden. Der Überwachungsbaustein und der Motorbaustein können dezentral völlig losgelöst von einem Prozessleitsystem bzw. einem Netzwerk sein oder können auch bei einer alternativen Variante Teil eines Prozessleitsystems bzw. Netzwerks sein. Wesentlich ist dabei, dass keinerlei Vernetzung vorliegt, eventuell sogar eine strikte Trennung, sodass der Überwachungsbaustein das Pumpenaggregat quasi völlig unabhängig überwachen kann, gegebenenfalls einen sicheren Zustand einleiten kann und einen entsprechenden Alarm absetzen kann.

Vorzugsweise ist ein Motorsteuergerät mit einem Motorbaustein, der Auswerteeinheit des Überwachungsbausteins und dem Antrieb verbunden, wobei der Antrieb vorzugsweise als Elektromotor ausgebildet ist.

Zum Schutz des Pumpenaggregats bzw. der gesamten Anlage werden von einer Auswerte-, Steuer- bzw. Regelungseinheit Betriebsparameter in dem Pumpenaggregat so variiert, dass der Antrieb der Fluidfördereinrichtung in einen stabilen Zustand kommt und wirksam geschützt ist.

Gegebenenfalls wird ein iteratives Verfahren angewendet, bei dem einzelne Schritte bzw. Schrittabfolgen bzw. das ganze Verfahren einfach oder mehrfach wiederholt werden.

Durch die Analyse der Betriebsparameter wird ein möglicher Cyberangriff detektiert. Die Messwerte werden hierzu mit einer Anzahl von im Motorsteuergerät hinterlegten Betriebszustandsmustern verglichen. Sollte ein Betriebszustand bei dem Pumpenaggregat erkennbar sein, der nicht hinterlegt ist, so wird automatisch ein Notzustand eingeleitet. Der Antrieb bzw. die Fluidfördereinrichtung bzw. das gesamte Pumpenaggregat wird dann vorzugsweise von dem Netzwerk, über das der Cyberangriff erfolgt ist, abgekoppelt, sodass kein weiterer Cyberangriff mehr möglich ist. Hierdurch lässt sich ebenfalls eine Fehlnutzung durch versehentliche Bedienfehler vermeiden.

In einer Ausführungsform ist vorgesehen, dass der Antrieb ein Elektromotor ist und dass die Drehzahlregelung der Fluidfördereinrichtung mittels eines mit dem Antrieb verbundenen Frequenzumrichters erfolgt. Vorteilhafterweise betrifft das mindestens eine erste Signal in diesem Fall einen Zustand bzw. Betriebsparameter des Frequenzumrichters.

Bei einer Variante der Erfindung handelt es sich bei der Einheit um eine dezentrale Steuerungs- und/oder Regelungsvorrichtung. Die Einheit kann unmittelbar an oder in der Fluidfördereinrichtung, der Steuerung oder dem Antrieb angebracht sein. Durch diese dezentrale Einheit ist ein Schutz vor Cyberangriffen auch dann möglich, wenn das ganze Prozessleitsystem bzw. Netzwerk durch den Cyberangriff bereits infiziert ist. Die unabhängige dezentrale Einheit kann ungünstige Betriebszustände des Antriebs bzw. der Fluidfördereinrichtung erfassen und somit einen Cyberangriff detektieren. Weiterhin kann diese dezentrale Einheit den Antrieb, die Fluidfördereinrichtung oder eine oder mehrere andere Komponenten des Pumpenaggregats von dem Netzwerk bzw. dem Prozessleitsystem solange abkoppeln, bis der Cyberangriff abgewehrt ist.

Bei einer bevorzugten Variante der Erfindung ist die Einheit dabei derart eingerichtet, dass sie in der Befehlsstruktur dominant gegenüber dem Prozessleitsystem bzw. dem Netzwerk ist, mit dem das Pumpenaggregat bzw. gewisse Komponenten desselben verbunden sind. Detektiert die Einheit einen Cyberangriff, so koppelt sie die entsprechenden Komponenten des Pumpenaggregats, z.B. den Antrieb oder Teile der Steuerung, komplett von dem Prozessleitsystem bzw. dem Netzwerk ab und schützt das Pumpenaggregat somit vor der aktuellen und weiteren Attacken.

Neben der Herbeiführung eines Sicherheitszustandes kann die Einheit ergänzend oder alternativ Alarmmeldungen in die Wege leiten, sodass der Betreiber auf den detektierten Cyberangriff hingewiesen wird.

Bei einer Variante der Erfindung weist die Einheit einen Datenspeicher auf. Der Datenspeicher dient zur Erfassung und Ablegung von technologischen Daten des Antriebs und/oder der Fluidfördereinrichtung und/oder der Steuerung und/oder weiterer Komponenten des Pumpenaggregats.

Vorzugsweise weist die Einheit mindestens einen Anschluss für einen Sensor auf. Insbesondere sind dabei Schwingungs-, Druck-, Durchfluss oder Temperatursensoren zur Detektion von Cyberangriffen geeignet.

Um ein schnelles An- bzw. Abschalten des Antriebs zu überbrücken und dadurch den Cyberangriff abzuwehren, kommt erfindungsgemäß eine Energiespeichereinheit zum Einsatz, die beispielsweise als Batterie oder Kondensatorkombination ausgeführt sein kann.

Weiter sind Schwingungsanregungen innerhalb der Fluidfördereinrichtung oder des Antriebs zu vermeiden. Durch provozierte Lastwechsel können Wechselwirkungen beispielsweise zwischen Laufrad und Leitrad des Pumpenaggregates (insbesondere bei einer Ausgestaltung als Kreiselpumpenaggregat) aber auch zwischen anderen Komponenten zu Druckschwingungen führen, die innerhalb Fluidfördereinrichtung bzw. der gesamten Anlage eine Resonanz erfahren können. Bei gezielter Anregung dieser Resonanzfrequenzen könnten Schwingungsamplituden erzeugt werden, die zur Beschädigung oder gar Zerstörung der Fluidfördereinrichtung oder der gesamten Anlage, innerhalb derer das Pumpenaggregat angeordnet ist, führen könnten.

Diese Zustände sind in Steuergeräten von Kreiselpumpenaggregaten bereits bekannt, da es beim Hoch- und Runterfahren der Anlagen genau darum geht, diese Betriebszustände möglichst schnell zu überwinden, um keinen Schaden herzustellen. Es besteht also die Möglichkeit, bereits bekannte Anlagendaten zu nutzen und eine gezielte Schädigung im Rahmen eines Cyberangriffs oder eines menschlichen Fehlers zu vermeiden.

Bei einer Variante der Erfindung kommt eine unterbrechungsfreie Stromversorgung (USV), englisch Uninterruptible Power Supply (UPS) zum Einsatz. Dadurch kann bei Cyberattacken die Energieversorgung des Antriebs oder anderer Teile des Pumpenaggregats sichergestellt werden.

Ein weiteres wesentliches Merkmal einer USV ist die maximale Überbrückungszeit, die von der Kapazität der Akkumulatoren abhängt. Sie kann je nach Anforderung wenige Sekunden oder mehrere Stunden betragen. Bei großem Bedarf an Leistung und Überbrückungszeit kommen auch Stromerzeugungsaggregate zum Nachladen der Akkumulatoren zum Einsatz.

Die vorliegende Erfindung betrifft weiterhin eine Einheit zur Durchführung des erfindungsgemäßen Verfahrens, die zum Schutz eines Pumpenaggregats gemäß dem Oberbegriff des Anspruchs 1 bei Cyberangriffen eingerichtet ist. Dabei ergeben sich offensichtlich dieselben Vorteile und Eigenschaften wie für das erfindungsgemäße Verfahren, weshalb an dieser Stelle auf eine wiederholende Beschreibung verzichtet wird.

Die Einheit ist vorzugsweise mit einem Rechnernetz verbunden und eingerichtet, bei Feststellung eines mutwillig herbeigeführten regelwidrigen Betriebs des Pumpenaggregats durch Auswertung des mindestens einen ersten Signals selbstständig die Verbindung zum Rechnernetz zu unterbrechen.

Gemäß einer Ausführungsform ist vorgesehen, dass die Einheit einen Signalverarbeitungsbaustein zur Verarbeitung des mindestens einen ersten Signals, einen Auswertebaustein zur Auswertung des mindestens einen ersten Signals, einen Speicher mit Daten der Fluidfördereinrichtung und/oder des Antriebs und/oder der Steuerung und vorzugsweise eine Eingabe-/Ausgabeeinheit aufweist.

Die Einheit ist vorteilhafterweise ferner eingerichtet, bei Feststellung eines mutwillig herbeigeführten regelwidrigen Betriebs des Pumpenaggregats durch Auswertung des mindestens einen ersten Signals selbstständig eine Ansteuerung / Regelung von Komponenten des Pumpenaggregats vorzunehmen, um das Pumpenaggregat in einen regelkonformen Betrieb und einen vor dem aktuellen und/oder vor weiteren Cyberangriffen geschützten Zustand zu überführen.

Weitere Merkmale und Vorteile der Erfindung ergeben sich aus der Beschreibung von Ausführungsbeispielen anhand von Zeichnungen und aus den Zeichnungen selbst. Dabei zeigen:
- Figur 1:: eine Kreiselpumpenanordnung, und
- Figur 2:: ein Blockschaltbild einer Einheit zur Abwehr einer Cyberattacke.

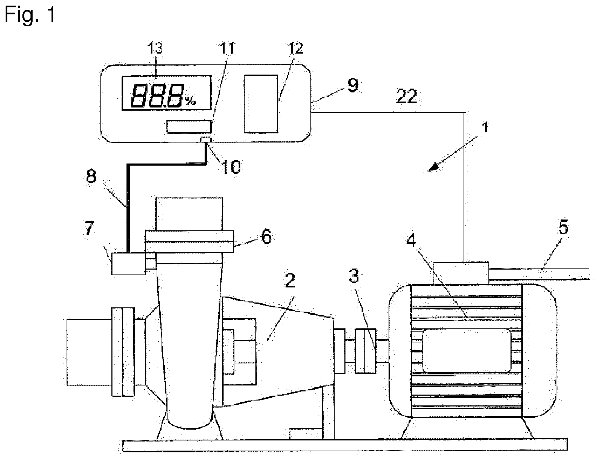

Figur 1 zeigt eine Anordnung 1 mit einer als Kreiselpumpe ausgeführten Fluidfördereinrichtung 2, die über eine Welle 3 mit einem Antrieb 4 verbunden ist. Der Antrieb 4 ist im Ausführungsbeispiel als Asynchronmotor ausgeführt, der die Kreiselpumpe 2 antreibt. Der Antrieb 4 wird von einer Netzzuleitung 5 gespeist. An einem Druckstutzen 6 der Kreiselpumpe 2 ist ein Sensor 7 zur Messung des druckseitigen Druckes oder Enddruckes der Kreiselpumpe 2 angeordnet. Der Sensor 7 ist über eine Leitung 8 mit einer Einheit 9 verbunden.

Die Einheit 9 ist weiterhin über eine Leitung 22 mit dem Antrieb 4 verbunden. Die Einheit 9 wertet Signale des Antriebs 4 und/oder des Sensors 7 aus und kann dadurch kritische Betriebszustände analysieren, die auf einen Cyberangriff auf den Antrieb 4 schließen lassen. Die Einheit 9 nutzt dazu das erfindungsgemäße Verfahren.

Vorzugsweise werden zur Durchführung des erfindungsgemäßen Verfahrens Kenngrößen des Antriebs 4 herangezogen werden, wie beispielsweise die Nennleistung. Aus diesen Parametern sind auch andere Parameter ableitbar bzw. berechenbar. Die Einheit 9 hat zur Erfassung der Signale der Sensoren 7 geeignete Anschlüsse 10. Die Anschlüsse 10 sind im Ausführungsbeispiel als Signaleingänge ausgeführt.

Im Ausführungsbeispiel besitzt die Einheit 9 einen Signalverarbeitungsbaustein 11. Der Signalverarbeitungsbaustein 11 kann beispielsweise auch in der Lage sein, eine Drehklangfrequenz mit einer verhältnismäßig hohen Genauigkeit zu bestimmen.

Das in der Einheit 9 ablaufende Verfahren wird von einem Rechenbaustein 12 gesteuert und koordiniert. Weiterhin weist die Einheit 9 vorzugsweise ein Anzeige- und Bedienelement 13 auf.

An der Anordnung kann ein, hier nicht dargestellter, weiterer Drucksensoranschluss vorgesehen sein, der beispielsweise zur Erfassung des Pumpensaugdruckes dient. Darüber hinaus kann die Anordnung weitere, hier nicht dargestellte, Signaleingänge und/oder eine serielle Busschnittstelle bzw. zum Ein- oder Auslesen von Parametern, aufweisen.

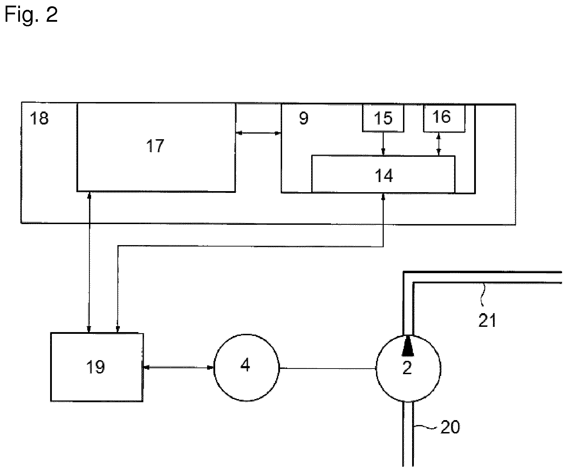

Die Figur 2 stellt ein Blockschaltbild dar und zeigt eine Einheit 9 zur Steuerung und/oder Regelung einer Kreiselpumpe 2. Die Einheit 9 verfügt bei der Darstellung gemäß Figur 2 über einen Auswertebaustein 14, einen mit dem Auswertestein 14 verbundenen Speicher 15 und eine ebenfalls mit dem Auswertebaustein 14 verbundene Eingabe-/Ausgabeeinheit 16.

Die Einheit 9 ist mit einem Motorbaustein 17 verbunden. Die Einheit 9 und der Motorbaustein 17 können Teil eines Prozessleitsystems 18 sein, müssen es aber nicht. Ein Motorsteuergerät 19 ist mit dem Motorbaustein 17, der Einheit 9 der Kreiselpumpe 2 und mit dem Antrieb 4 verbunden. Die Kreiselpumpe 2 wird mit flüssigem Fördermedium über eine Zuführleitung 20 versorgt und pumpt das Fördermedium über eine Abführleitung 21 heraus. Der Datenverkehr zwischen den genannten Komponenten wird durch Pfeile verdeutlicht.

### Bezugszeichenliste:

- 1: Anordnung
- 2: Fluidfördereinrichtung (Kreiselpumpe)
- 3: Welle
- 4: Antrieb
- 5: Netzzuleitung
- 6: Druckstutzen
- 7: Sensor
- 8: Leitung
- 9: Einheit
- 10: Anschluss
- 11: Signalverarbeitungsbaustein
- 12: Rechenbaustein
- 13: Bedienelement
- 14: Auswertebaustein
- 15: Speicher
- 16: Eingabe-/Ausgabeeinheit
- 17: Motorbaustein
- 18: Prozessleitsystem
- 19: Motorsteuergerät
- 20: Zuführleitung
- 21: Abführleitung

## Patentansprüche

1. Verfahren zum Schutz eines Pumpenaggregats umfassend eine drehzahlgeregelte Fluidfördereinrichtung (2), insbesondere eine drehzahlgeregelte Kreiselpumpe, einen Antrieb und eine Steuerung, bei Cyberangriffen mit folgenden Schritten:
(i) Erfassung von mindestens einem die Drehzahl und/oder Drehzahlregelung der Fluidfördereinrichtung (2) betreffenden ersten Signal, vorzugsweise mittels mindestens einem Sensor,
(ii) Auswertung des ersten Signals mittels einer Einheit (9), wobei bei der Auswertung ein Vergleich von mindestens einer Soll-Größe und mindestens einer aus dem ersten Signal abgeleiteten Ist-Größe erfolgt,
(iii) Ausgabe von mindestens einem zweiten Signal durch die Einheit (9), falls die Einheit (9) aufgrund der Auswertung des ersten Signals einen mutwillig herbeigeführten regelwidrigen Betrieb des Pumpenaggregats feststellt,
(iv) Einstellung von Komponenten der Fluidfördereinrichtung (2) und/oder der Steuerung und/oder des Antriebs zur Herbeiführung eines regelkonformen Betriebs der Fluidfördereinrichtung (2) **dadurch gekennzeichnet, dass** ein vor dem aktuellen und/oder vor weiteren Cyberangriffen geschützter Zustand des Pumpenaggregats in Reaktion auf das zweite Signal herbeigeführt wird, wobei Schritt (iv) die Aktivierung einer Energiespeichereinrichtung zur Aufrechterhaltung der Energieversorgung des Pumpenaggregats während eines Cyberangriffs umfasst.

2. Verfahren nach Anspruch 1, **dadurch gekennzeichnet, dass** die Einheit (9) eine lokale Steuerungs- und/oder Regelungseinrichtung ist, die vorzugsweise an oder in der Fluidfördereinrichtung (2) angeordnet und weiter vorzugsweise mit einem Rechnernetz verbunden oder verbindbar ist.

3. Verfahren nach Anspruch 1 oder 2, **dadurch gekennzeichnet, dass** die Drehzahlregelung der Fluidfördereinrichtung (2) mittels eines mit dem Antrieb verbundenen Frequenzumrichters erfolgt, wobei der Antrieb ein Elektromotor ist.

4. Verfahren nach einem der vorhergehenden Ansprüche, **dadurch gekennzeichnet, dass** die Einheit (9) die Zyklen für ein Schalten der Fluidfördereinrichtung (2), Drehzahlgrenzen, die Steigung einer Drehzahländerung, Schwingungen und/oder Anomalien gegenüber einem hinterlegten und/oder erlernten Verhalten der Fluidfördereinrichtung (2) erfasst.

5. Verfahren nach einem der vorhergehenden Ansprüche, **dadurch gekennzeichnet, dass** die Einheit (9) einen Datenspeicher für Daten der Fluidfördereinrichtung (2) und/oder des Antriebs (4) und/oder der Steuerung aufweist.

6. Verfahren nach einem der vorhergehenden Ansprüche, **dadurch gekennzeichnet, dass** die Einheit (9) einen mutwillig herbeigeführten regelwidrigen Betrieb des Pumpenaggregats feststellt, falls die Auswertung des ersten Signals eine geringfügige und/oder dauerhaft wirkende und/oder regelmäßig auftretende und/oder kurzzeitige intensive und/oder schwellende und/oder strukturiert auftretende Anomalie erfasst, die im normalen Betrieb des Pumpenaggregats nicht vorkommt.

7. Verfahren nach einem der vorhergehenden Ansprüche, **dadurch gekennzeichnet, dass** der mindestens eine Sensor ein Strahlungs- und/oder Schall- und/oder Schwingungs- und/oder Druck-, und/oder Durchfluss- und/oder Drehzahl- und/oder Temperatursensor ist.

8. Verfahren nach einem der vorhergehenden Ansprüche, **dadurch gekennzeichnet, dass** Schritt (iv) das Abkoppeln von Komponenten des Pumpenaggregats, insbesondere der Einheit (9), von einem Rechnernetz und/oder das autarke Betreiben des Pumpenaggregats umfasst.

9. Einheit (9), die zur Durchführung eines Verfahrens nach einem der Ansprüche 1 bis 8 eingerichtet ist, die zum Schutz eines Pumpenaggregats mit einer drehzahlgeregelten Fluidfördereinrichtung (2), einem Antrieb und einer Steuerung eingerichtet ist, wobei die Einheit (9) vorzugsweise mit einem Rechnernetz verbunden ist und eingerichtet ist, bei Feststellung eines mutwillig herbeigeführten regelwidrigen Betriebs des Pumpenaggregats durch Auswertung des mindestens einen ersten Signals selbstständig die Verbindung zum Rechnernetz, sofern Einheit (9) mit einem Rechnernetz verbunden ist, zu unterbrechen.

10. Einheit (9) nach Anspruch 9, **dadurch gekennzeichnet, dass** sie einen Signalverarbeitungsbaustein (11) zur Verarbeitung des mindestens einen ersten Signals, einen Auswertebaustein (14) zur Auswertung des mindestens einen ersten Signals, einen Speicher (15) mit Daten der Fluidfördereinrichtung (2) und/oder des Antriebs und/oder der Steuerung und vorzugsweise eine Eingabe-/Ausgabeeinheit (16) aufweist.

## Claims

1. Method for protecting a pump unit, comprising a speed-controlled fluid-conveying device (2), in particular a speed-controlled centrifugal pump, a drive and a control system, during cyber attacks, comprising the following steps:
(i) detecting at least one first signal relating to the speed and/or speed control of the fluid-conveying device (2), preferably by means of at least one sensor,
(ii) evaluating the first signal by means of a unit (9), wherein, during the evaluation, at least one target variable and at least one actual variable derived from the first signal are compared with each other,
(iii) outputting at least one second signal by means of the unit (9) if the unit (9) determines a wilful illegal operation of the pump unit on the basis of the evaluation of the first signal,
(iv) adjusting components of the fluid-conveying device (2) and/or the control system and/or the drive to bring about control-conformant operation of the fluid-conveying device (2), **characterized in that** a state of the pump unit protected from the current and/or from further cyber attacks is brought about in response to the second signal, wherein step (iv) comprises the activation of an energy storage device for maintaining the power supply of the pump unit during a cyber attack.

2. Method according to Claim 1, **characterized in that** the unit (9) is a local control and/or regulating device, which is preferably arranged on or in the fluid-conveying device (2) and, further preferably, is or can be connected to a computer network.

3. Method according to Claim 1 or 2, **characterized in that** the speed control of the fluid-conveying device (2) is achieved by means of a frequency converter connected to the drive, wherein the drive is an electric motor.

4. Method according to one of the preceding claims, **characterized in that** the unit (9) detects the cycles for switching the fluid-conveying device (2), speed limits, the slope of a speed change, vibrations and/or anomalies as compared with a stored and/or learned behaviour of the fluid-conveying device (2).

5. Method according to one of the preceding claims, **characterized in that** the unit (9) has a data memory for data of the fluid-conveying device (2) and/or the drive (4) and/or the control system.

6. Method according to one of the preceding claims, **characterized in that** the unit (9) determines a wilful illegal operation of the pump unit if the evaluation of the first signal detects a slight and/or permanently acting and/or regularly occurring and/or brief, intensive and/or growing and/or structurally occurring anomaly which does not occur in normal operation of the pump unit.

7. Method according to one of the preceding claims, **characterized in that** the at least one sensor is a radiation and/or acoustic and/or vibration and/or pressure and/or flow and/or speed and/or temperature sensor.

8. Method according to one of the preceding claims, **characterized in that** step (iv) comprises the disconnection of components of the pump unit, in particular the unit (9), from a computer network, and/or the autonomous operation of the pump unit.

9. Unit (9) set up to perform a method according to one of Claims 1 to 8, which is set up to protect a pump unit having a speed-controlled fluid-conveying device (2), a drive and a control system, wherein the unit (9) is preferably connected to a computer network and is set up to interrupt the link to the computer network automatically when a wilfully caused illegal operation of the pump unit is determined by evaluating the at least one first signal, if the unit (9) is connected to a computer network.

10. Unit (9) according to Claim 9, **characterized in that** it has a signal processing module (11) for processing the least one first signal, an evaluation module (14) for evaluating the at least one first signal, a memory (15) with data of the fluid-conveying device (2) and/or the drive and/or the control system, and preferably an input/output unit (16).

## Revendications

1. Procédé permettant de protéger un groupe de pompage comprenant un dispositif de circulation de fluide régulé en vitesse de rotation (2), en particulier une pompe centrifuge régulée en vitesse de rotation, un dispositif d'entraînement et un dispositif de commande, en cas de cyberattaques, comprenant les étapes suivantes consistant à :
(i) détecter au moins un premier signal concernant la vitesse de rotation et/ou la régulation de vitesse de rotation du dispositif de circulation de fluide (2), de préférence au moyen d'au moins un capteur,
(ii) évaluer le premier signal au moyen d'une unité (9), dans lequel, lors de l'évaluation, une comparaison d'au moins une grandeur théorique et d'au moins une grandeur réelle déduite du premier signal est effectuée,
(iii) émettre au moins un deuxième signal par l'unité (9) si l'unité (9) constate en raison de l'évaluation du premier signal un fonctionnement non-conforme du groupe de pompage, provoqué délibérément,
(iv) régler des composants du dispositif de circulation de fluide (2) et/ou du dispositif de commande et/ou du dispositif d'entraînement pour provoquer un fonctionnement conforme du dispositif de circulation de fluide (2),
**caractérisé en ce qu'**un état protégé contre la cyberattaque actuelle et/ou contre d'autres cyberattaques du groupe de pompage est provoqué en réaction au deuxième signal, l'étape (iv) comprenant l'activation d'un dispositif accumulateur d'énergie servant à maintenir l'alimentation en énergie du groupe de pompage pendant une cyberattaque.

2. Procédé selon la revendication 1, **caractérisé en ce que** l'unité (9) est un dispositif de commande et/ou de régulation local qui est disposé de préférence sur ou dans le dispositif de circulation de fluide (2), et de plus grande préférence est relié ou peut être relié à un réseau informatique.

3. Procédé selon la revendication 1 ou 2, **caractérisé en ce que** la régulation de vitesse de rotation du dispositif de circulation de fluide (2) est effectuée au moyen d'un convertisseur de fréquence relié au dispositif d'entraînement, le dispositif d'entraînement étant un moteur électrique.

4. Procédé selon l'une quelconque des revendications précédentes, **caractérisé en ce que** l'unité (9) détecte les cycles pour une commutation du dispositif de circulation de fluide (2), des limites de vitesse de rotation, la pente d'une variation de vitesse de rotation, des vibrations et/ou des anomalies par rapport à un comportement mémorisé et/ou appris du dispositif de circulation de fluide (2).

5. Procédé selon l'une quelconque des revendications précédentes, **caractérisé en ce que** l'unité (9) présente une mémoire de données destinée à des données du dispositif de circulation de fluide (2) et/ou du dispositif d'entraînement (4) et/ou du dispositif de commande.

6. Procédé selon l'une quelconque des revendications précédentes, **caractérisé en ce que** l'unité (9) constate un fonctionnement non conforme du groupe de pompage, provoqué délibérément, si l'évaluation du premier signal détecte une anomalie faible et/ou effective durablement et/ou apparaissant régulièrement et/ou brièvement intensive et/ou apparaissant par vagues et/ou de manière structurée qui ne survient pas pendant le fonctionnement normal du groupe de pompage.

7. Procédé selon l'une quelconque des revendications précédentes, **caractérisé en ce que** ledit au moins un capteur est un capteur de rayonnement et/ou un capteur acoustique et/ou un capteur d'oscillation et/ou un capteur de pression et/ou un capteur de débit et/ou un capteur de vitesse de rotation et/ou un capteur de température.

8. Procédé selon l'une quelconque des revendications précédentes, **caractérisé en ce que** l'étape (iv) comprend la déconnexion de composants du groupe de pompage, en particulier de l'unité (9), d'un réseau informatique et/ou le fonctionnement autonome du groupe de pompage.

9. Unité (9) qui est conçue pour exécuter un procédé selon l'une quelconque des revendications 1 à 8, et qui, pour la protection d'un groupe de pompage, est équipée d'un dispositif de circulation de fluide régulé en vitesse de rotation (2), d'un dispositif d'entraînement et d'un dispositif de commande, l'unité (9) étant de préférence reliée à un réseau informatique et étant conçue, lorsqu'un fonctionnement non-conforme du groupe de pompage, provoqué délibérément, est constaté par l'évaluation du au moins un premier signal, pour couper automatiquement la liaison avec le réseau informatique dans la mesure où l'unité (9) est reliée à un réseau informatique.

10. Unité (9) selon la revendication 9, **caractérisée en ce qu'**elle présente un module de traitement de signal (11) pour traiter ledit au moins un premier signal, un module d'évaluation (14) pour évaluer ledit au moins un premier signal, une mémoire (15) comprenant des données du dispositif de circulation de fluide (2) et/ou du dispositif d'entraînement et/ou du dispositif de commande, et de préférence une unité d'entrée/sortie (16) .
